# EUROPEAN PATENT SPECIFICATION

(11) **EP 3 684 165 B1**
(45) Date of publication and mention of the grant of the patent: **04.05.2022**
(21) Application number: 18773441.3
(22) Date of filing: 20.09.2018
(51) Int. Cl.: A01G 31/02, A01K 63/04, A01K 61/10

(54) **DECOUPLED MULTI-TROPHIC PRODUCTION FACILITY WITH DISTILLATION UNIT**
ENTKOPPELTE MULTITROPHISCHE PRODUKTIONSANLAGE MIT DESTILLATIONSEINHEIT
INSTALLATION DE PRODUCTION MULTI-TROPHIQUE DÉCOUPLÉE AVEC UNITÉ DE DISTILLATION

(30) Priority: 22.09.2017 DE 102017121990; 22.09.2017 DE 102017121995; 22.09.2017 DE 102017122005
(43) Date of publication of application: 29.07.2020
(73) Proprietor: Desertfoods International GmbH, 18196 Dummerstorf (DE)
(72) Inventor: GODDEK, Simon, 6708 PG Wageningen (NL); DELAIDE, Boris, 1150 Bruxelles (BE)
(74) Representative: LS-MP von Puttkamer Berngruber Loth Spuhler
(86) International application number: PCT/EP2018/075478
(87) International publication number: WO 2019/057824

(56) References cited:
- DE-A1-102014 017 178
- US-A- 5 322 035
- US-A1- 2012 023 821
- US-A1- 2017 013 810
- US-B1- 8 677 686

## Description

The invention relates to a facility for growing vegetation according to claim 1 as well as to a method of operating such a system according to claim 9.

Systems relating generally to agriculture and more particularly to systems and methods for growing vegetation are principally well known.

EP 2 158 801 A1 discloses an aquaponic facility with closed water circulation comprising an aquaculture unit and a hydroponic unit which are functionally connected to each other.

WO 2013/132481 relates to an aquaculture system, having a closed-loop system including a culture tank and a treatment unit treating and reusing water of the system.

WO 2015/160966 refers to an aquaponic system aiming at remineralizing effect providing by-products which are broken down by nitrogen-fixing bacteria into nitrates and nitrites, providing water which is fed to the hydroponic system, where plants use the nitrates and nitrites as nutrients; the water is then recirculated back to the aquaculture system; plants are grown as in hydroponic systems, with the roots immersed in the nutrient-enriched water; the operator adjusts pH-values as necessary using chemical additions to maintain pH at a healthy level for fish living in the tank and for decomposition of organic material; bacteria in the system convert the ammonia into nitrites and then into nitrates using the nitrification process.

The document EP 2 276 795 A1 discloses a method for producing feed material with regard to hydroponic systems as well as to aquacultures.

Also in EP 2 963 060 A1 a method for producing feed material as biomass for use in aquacultures and hydroponic systems is being disclosed.

US 8 677 686 B1 describes an aquaponic system that includes a solids separator configured to accept waste water and separate settleable solids from suspended-waste water, whereby two main flow paths are generated. A first flow path generates nutrient-rich water from the suspended-waste water for use by the hydroponic growth apparatus. The second flow path generates nutrient-rich sludge for use as fertilizer by a substrate-based growth apparatus.

Finally, US 5 322 035 A describes another prior art system.

Aquaponics systems, which are directed to food production methods for producing plants and aquatic organisms combine the production systems of recirculating aquaculture and hydroponics. Accordingly, aquaponics provide nutrient-enriched water to the hydroponic plant culture unit, which intern depurates the water that is returned to the aquaculture tanks.

For instance, aquaponics systems are directed to plants, fish, bacteria and/or other organisms, which grow up in a common symbiosis. Bacteria convert the wastewater from fish into nutrient for plant; the plants filter the sewage water for nutrients; the treated sewage water is then directed back to the fish.

The drawback of the state of the art cited is that it does not find an effective compromise to produce both plants and fish in the same environmental condition. One of the reasons herefore is that plants and fish often require different pH ranges of water acidity. Fish culture normally requires a pH range between pH 6.5 to 9.0 whereas plants often prefer a pH range less than 6.5.

Accordingly, it is in object of the present invention to provide a facility as well as a method for operating such a facility which enables an increasing of the nutrient as well as pH concentration for the hydroponic part of the system, while ensuring preferable nutrient-poor conditions for the fish.

However, practice has shown that an optimal nutrient concentration level cannot be achieved because of constructing the hydroponic cultivation area bigger in order to guarantee as efficient water flow from a recirculating aquaculture system in order to keep the recirculating aquaculture system nutrient concentration at an optimal level. This means that the hydroponic system needs adding nutrients e.g. as artificial fertilizers. This leads to economical drawbacks since the operational costs will increase due to additional fertilization requirements. Hence, it is one other object of the invention, to provide a harmonized system for increasing the nutrient concentration within the hydroponic system whereas the fish is provided with nutrient-poor material.

In addition the state of the art does not solve the problem of high nitrate values in the recirculating aquaculture system. Thus, it is an object of the invention to provide a facility as well as a method for running this facility which solves the problem of high nitrate values.

In this respect it is a further object of the invention to improve the nutrient balance of multi-trophic and hydroponic subsystems.

In addition it would be advantageous to minimize the discharge of water used in this system.

Further on, it is an object of the invention to reduce the fertilization requirements for the hydroponic subsystem.

These various aspects are solved by the invention according to a facility according to claim 1 and the method for operating such a system according to claim 9.

### Summary of the invention:

The present invention refers to a facility for growing vegetation.

The invention will be described and clarified with the aid of an aquaponics system, although the invention concerns apparently the system for growing vegetation which takes up the concept of a combination of two production systems into one, aquaponics being a typical example for such a system and defining an integrated quasi closed-loop multi-trophic food production system comprising a recirculating aquaculture system (hereinafter: RAS) and a hydroponic unit.

The facility according to the invention is designed to process a nutrient-enriched medium, which is derived from a component or part of it and which is within this medium, whereby the medium is conducted to a hydroponic unit and hereby providing nutrients for growth of the vegetation.

An example of such a system is the aquaponics system comprising nutrient-enriched water derived from fish and/or other aquatic animals or aquatic organisms, which is conducted to the hydroponic unit, hereby, providing nutrients for growth of the vegetation, e.g. growth of plants.

However, in another example such a facility is also capable of process handling of metabolic products of other animals such as livestock as well as of process handling of organic household waste or plant waste products.

In one embodiment of the present invention the facility processes the medium which is nutrient-enriched water. This water contains nutrient derived from the component or part of it. Component or part in the sense of the present invention may be aquatic animals and/or aquatic organisms, e.g. fish, crabs, crayfish etc., which produces effluents which lead to the nutrient-enrichment of the medium. Nutrient-enrichment can also be the result of non-eaten feed given to the aquatic animals and/or aquatic organisms.

For the purposes of the present invention the expression aquatic animals and/or aquatic organisms will be summarized by the expression fish.

The facility uses nutrient-enriched medium by converting its nutrients into usable vegetation nutrients, e.g. plant nutrients. The plants in the system may absorb the nutrient either via roots or via the cell walls. The plants are functional part resp. target object of the process handling part of the hydroponic unit.

Hence, the facility is capable to produce for instance aquatic animals, e.g. fish, crayfish etc., and plants, e.g. vegetables, herbs, medical plants, fruits etc., in a microbial ecosystem ensuring high levels of medium reuse, especially water reuse, and nutrient recycling.

In addition, the facility is designed to conduct a process, in which the nutrient-enriched medium is cleansed by the plants in the hydroponic unit before it is returned to the fish again in the system.

The nutrient-enriched medium, e.g. the nutrient enriched water, which may also be called waste medium, e.g. waste water, is preferably converted by bacteria and/or worms and/or other organisms into food for the plants and is directed to the hydroponic unit in which the plants or other organisms filter the nutrient-enrichment before the medium is returned back to the fish.

Needless to say that in such a system of circulation the medium chosen has to feed the fish environment as well as the plant environment. This requirement is, however, difficult to be fulfilled since fish as well as plants and the bacteria need a medium having different pH-ranges, to just mention this specific difference, as already described above.

Compromising the needs of fish and plants within a single medium process loop reduces quasi automatically the efficiency of such a singular recirculating loop system compared to the result of single fish production, single plant production or single crop production.

Thus, systems have been developed in which fish, plants and, if applicable, remineralization are integrated as separate functional units comprising different medium cycles, e.g. water cycles, that can be controlled independently. Such systems are called in the field of aquaponics Decoupled Aquaponic Systems (hereinafter: DAPS).

These at least two independent systems communicate with each other increasing nutrients for the plants and providing cleansed water from the plants to dilute the nutrient-enriched composition in the fish sub-unit.

The present invention is based on such a DAPS-system offering the advantage that the multi-trophic part of the system as well as the hydroponic part of the system can be separated in case the corresponding other part causes a problem, e.g. the need of repair. Decoupled systems have also advantages with regard to large-scale commercial systems.

According to the invention it is preferred too.

The facility according to the invention comprises accordingly a multi-trophic part as well as a hydroponic part. The facility also comprises a distillation. In a preferred embodiment the facility may also comprise other functional units, e.g. a bio reactor unit.

### Multi-trophic part:

Although many options may be used for the single components and the interrelationship to each other, in aquaponics systems (which are the example in order to describe the system for growing vegetation according to the invention), the use of recirculating aquaculture systems (hereinafter also: RAS) is preferred. The RAS is an embodiment of the multi-trophic part of the facility.

The multi-trophic part of the facility comprises a container. Instead of a container also a tank, vessel or similar constructions can be used, hereinafter called in general: container.

This multi-trophic system comprises preferably besides the container additional units, such as a bio-filter unit, optionally a gas exchange unit, a mechanical filter unit, a sump container unit, solid removal devices, UV-lighting devices or ozone devices for desinfection, air pumps, pH regulation-devices and/or sedimentation containers. These additional units are preferably arranged outside of the container.

The multi-trophic container contains the fish and could be therefore also called fish tank. The container has preferably one or more connectors to a medium discharge line, e.g. a water discharge line, which conducts the medium into at least one sedimentation tank or chamber. This sedimentation device may be used as pre-filtration system as well as pump sumps.

The total medium flow can be split into two independent loops. The first loop can be used for conducting the medium, e.g. water, to the plant facility, i.e. to the hydroponic part, according to the invention. The second independent loop returns water back from the hydroponic part of the system to the multi-trophic container containing the fish.

Thus, when describing the facility and its method of processing, it should never be forgot that there is a permanent loop, esp. a circulation medium, e.g. circulation water. This means amongst others that when later describing for instance the flow resp. conduct of the medium from the fish tank to the mechanical filter unit and from there to the bio filter unit and from there to the sump unit and from there back again to the fish tank that the sump unit gathers the medium from this unit only. Since it is a circulating loop the sump unit, for instance, also receives medium which already has passed the loop of the hydroponic part and/or other parts, such as the distillation unit, the bio reactor unit, and thus conducting this part of the medium back again to the fish tank.

This circulation of the medium always has to be kept in mind when describing the function or construction of the units of the facility or the method of its working. The system of the facility and its process is, hence, not static but permanently circulating.

In general lift pumps for the supply of the medium can be used, they can be supported by a system of gravity which makes the medium flowing into a certain direction.

In order to achieve a good quality of the medium, the medium, e.g. the water, has to be filtered, solids have to be removed as well as ammonia and CO₂ or other components.

Dissolved oxygen levels, pH-values and temperature are important factors for fish growth and have to be maintained at levels required at all times.

The system according to the invention comprises, hence, preferably a unit for mechanical filtration of the medium of the recirculating aquaculture system. In order to maintain good medium quality and to prevent the system from decaying, it is necessary to remove rests of feed given to the fish and the effluents of the fish, e.g. excrements. This is processed by the mechanical filtration unit.

Otherwise ammonia would increase, oxygen decrease, fouling of the media due to specific bacteria would lead to anaerobic concentration which itself results in hydrogen sulphite being a toxic gas for the fish; additionally the danger of clogging of the roots of the plants is increased.

It is preferred to have the mechanical filtration unit arranged directly following the multi-trophic container, e.g. the fish tank, and preferably ahead of a bio filter unit which will be described later. The arrangement order of mechanical filtration unit and bio filter unit could also be the other way round.

The mechanical filtration unit may use various techniques known in the state of the art. For instance, the facility may use micro screen filters, e.g. drum filters, sand filters, bead filters.

The mechanical filtration unit separates at least most of the solid parts of the medium, e.g. feed rests, excrements, from the rest of the medium, i.e. from the liquid part of the medium. Typically, the solid parts of the medium are in the range of 0,5 - 5 weight percent.

From the mechanical filtration unit the liquid part of the medium is being conducted to the sump unit whereas the solid parts of the medium are conducted to a bio reactor unit, if provided, each for further processing. In case the bio reactor unit is not provided according to another embodiment of the invention, the liquid part preferably only is conducted to the sump unit only.

The conduct may be provided either by the mechanical filtration unit directly or via a separate device which is functionally and constructively connected to the mechanical filtration unit.

Instead or in addition to the filtration may use units based on sedimentation, separators, e.g. mechanical filtration unit, swell or radial flow separators, or other units based on gravity separation.

As already mentioned, the mechanical filtration unit is followed by a unit for bio filtration and a sump unit.

The sequence order of the sump unit or the bio filtration unit may be as desired. It is preferred to provide both of the sump unit and the bio filtration unit in the facility.

The sump unit comprises a container and receives at least most of the liquid part of the medium for further processing. The sump unit receives, thus, the liquid part of the medium containing the dissolved nutrients. The sump unit may be preferably designed for a further refinement process, e.g. for further separation of the nutrient components.

At least most of the nutrient-enriched part of the liquid is further conducted from the sump unit of the multi-trophic part to the hydroponics sump unit which will be described below in more detail. This nutrient-enriched part is intended for further processing within the hydroponic part of the entire facility.

The liquid part of the medium which will be returned to the container at the end of the processing steps will be conducted from the sump unit either entirely or partially to the bio filtration unit.

According to these functions the sump unit has various means to separate the various flows of the circulating medium.

In case the bio filtration unit follows directly the mechanical filtration unit, the liquid part of the medium mentioned will be conducted to the sump unit of the multi-trophic part of the facility and further processed in this sump unit as described and then either fully or partially conducted to an optional gas exchange unit or entirely conducted to the fish tank back again.

The unit for bio filtration aims at a removal of - among others - ammonia, dissolved organics and carbon dioxide. The ammonia being a toxic metabolite found in the excrements of the fish, is being converted into nitrite and/or nitrate.

The bio filter unit can be made of the moving bed biological reactor-type (hereinafter: MBBR). The MBBR-reactor consists of a container, tank, canister etc.; it is a reactor filled with bio media and aeration system. Bacteria brake down waste products and aeration is used to add oxygen and strip CO₂.

The bio filter media may be made of various materials, e.g. of PVC or PE polymer. MBBR-bio filtration systems, hence, consist of a reactor tank filled with the bio filter substrate that consists of small plastic tubes. A dispensing device on the bottom is used to aerate the filter, coursing the bio filter substrate to move. As a result, there is good contact between the waste water and the bio film that grows on the substrate. Air bubbles further help to provide oxygen to the bacteria and strip carbon dioxide. Blowers to provide air may be optional.

In general, nitrate concentration in systems according to the invention may be controlled either by water exchange, plant uptake and/or denitrification through anoxic bacterial reduction.

After having removed all or a great part of the solids by the above mentioned mechanical filtration unit, the medium, e.g. water, is conducted through the bio filter unit where the ammonia will be converted first to nitrite and then to nitrate. This conversion process is known in the state of the art and, thus, not described in detail.

The nitrate received by this process is in addition an important nitrogen source for the plants. Since nitrite is also toxic to the fish it has to be ensured that the bacterial system in the bio filter facility works properly with the result that the ammonia is kept within non-toxic levels; the existence of ammonia cannot be deleted completely since the fish segregate permanently ammonia due to the excrements. This means, the bio filtering is an ongoing process.

It is preferable to provide significant aeration in MBBRs. The media should be preferably screened or otherwise maintained within the containment vessel.

Irrespective of these general requirements, it is up to the men skilled in the art to provide an appropriate bio filter unit the choice of which depending on several factors as size of the entire system, temperature, of species of aquatic animals, feeding system, water exchange rate and so on.

Instead or additional to MBBRs also bead filters, sand filters or trickling filters may be used as bio filtration system.

Other systems may be used instead of or in addition to the aforementioned systems, for instance oxidation systems which apply ozone treatment.

The choice of these different options depends very much on various aspects, e.g. costs, space available, simple or more complicated construction, size of the entire system for growing vegetation.

According to this the RAS part of the invention comprises optionally a gas exchange unit. The gas exchange unit dissolves CO₂ from the medium, e.g. water, and optimizes the level of oxygen. Oxygen is an important quality parameter for the growth of fish. The configuration of the gas exchange unit depends on kind of fish, size of fish, feeding parameters, water temperature and so on.

After passing this optional gas exchange unit and/or the previously mentioned bio filtration unit or sump unit, the nutrient-poor water is conducted back to the container of the RAS loop.

Hence, the at least one RAS part is intended to manage the fish sludge and to provide control of the most important medium, e.g. water, quality parameters, e.g. dissolved oxygen, TAN (total ammonia nitrogen (mg N/L = mg NH₃ - N/L + mg NH₄ - N/L)), suspended solids and carbon dioxide.

### Hydroponic Part:

The at least one hydroponic part of the entire facility of the invention comprises at least one container, which contain the substrates for the growth of the vegetation, e.g. the plants, and - of course - the plants themselves. The nutrients which are necessary for the growth of the vegetation are usually supplied by substrates which are part of the solution which delivers all the nutrients to the roots or to the cell walls of the plants. Irrigation systems are normally integrated.

There exist various constructional approaches of these hydroponic parts of the facility possible.

One of these techniques refers to the deep water culture (hereinafter: DWC) also known as direct water culture, that works by suspending the plants' roots directly into a highly oxygenated nutrient solution. DWC systems are very effective, easy to construct and to operate. Containers, tanks, vessels etc. are usually filled with water and these plants arranged on plastic sheets excessing the water through openings. The plants' roots are directed into the oxygenated medium which continuously flows from and back to the multi-trophic container, e.g. to the fish tanks.

Other hydroponic systems are the aeroponic systems using a process of growing plants in an air or mist environment, however, without using soil or any kind of medium.

Another system may be summarized as continuous flow system; continuous flow techniques include nutrient film techniques (hereinafter: NFT) and drip systems. The basic concept refers to a continuous flow of nutrients providing good drainage and flow.

The so called drip irrigation system uses small emitters to drip nutrients directly onto the roots or soil of the plants. The system can be used with medium and soil.

Ebb and flow-system is described as a system of flood and drain hydroponics flooding containers with a nutrient solution at regular intervals and then conducting it back to the multi-trophic container.

According to the NFT-system nutrients are pumped from the multi-trophic container into a tray to form a thin film of nutrients constantly flowing with the roots of the plants dipped in them using no growing medium.

The DWC-system is called RDWC-system when using it together with recirculating direct water culture systems. The RDWC works on the same principle as the DWC-system but may have a separate central container which feeds several sub-containers, tanks, vessels etc.

The roots of the plants in the hydroponic part of the system need oxygen. For certain plants increasing the oxygen leads to an increase of uptake of nutrients which itself leads to more growth.

Hydroponic systems require allowing the roots of the plants to come into contact with oxygen. In ebb and flow systems this is achieved by having regular timed flows of nutrient solution interrupted by periods of non-delivery so that the roots can breathe. In a DWC-systems the roots of the plants are always connected to nutrient solution; the oxygen needed by the plants is also within the solution.

The soil in the hydroponic system for the roots of the plants can be consist of various products, e.g. so called rockwool cubes, hydroton-balls, gravels, expanded clay or something else.

All of the above mentioned systems require effective mechanical filtering to avoid animal's waste domiciling on the plants' roots.

The hydroponic part preferably also comprises a sump unit. This sump unit is preferably arranged ahead of the above described hydroponic container in the loop, designed to take the plants. This hydroponic sump unit itself may comprise a pump and/or filter(s) of appropriate kind. The sump unit of the hydroponic part receives the RAS water as processed in the multi-trophic part of the facility, i.e. from the sump unit, and as described above. A further processing takes place in the sump unit, for instance nutrient supplementation and processing as well as processing of the water which will be conducted to the hydroponic bed as just described. The adaption of the pH level, as described below, may take place in connection with the hydroponic sump unit.

The hydroponic sump unit is also designed to receive back the water from the hydroponic bed after the plants having taken up the nutrients and conducting it back in a cleansed manner to the sump unit of the RAS part of the facility. This water sent back is accordingly nutrient-poor. With regard to the distillation unit the hydroponic sump unit has additional functions which will be described in the context of distillation unit. In order to comply with these various functions the hydroponic sump unit has means to separate the different flows.

The size of the hydroponic part and its units of the present invention depends on the amount of nutrients, i.e. the fish feed to the RAS, which is made available to the system. The scope of the nutrients which are made available for the plants by remineralizing aqua culture sludge results in a higher amount of nutrients which will be available for the plants. Accordingly, the size of the hydroponic part of the facility system has to be adopted to the scope of remineralizing aqua culture sludge.

### General modules/components:

The facility comprises preferably further modules/components which are exemplarily described as follows:
Since it is the recirculating aqua culture system (RAS) which brings the necessary nutrients to the hydroponic component of the system and since the medium provides oxygen both to the fish and the plants, there are additional quality parameters and devices necessary in order to control the environmental parameters of the system for growing vegetation according to the invention.

One of the parameters is the temperature which may considerably vary with regard to the species of the fish and with regard to the species of the plants. Temperature also has to keep the requirements in mind for nitrifying bacteria. Cold water fish for instance needs temperatures in the range between 10° - 18°C, various tropical fish prefer temperatures between 22° - 32°C. Plants often prefer temperatures in the range of 14° - 20°C; nitrifying bacteria need a range of 16° - 35°C.

Hence, the system comprises preferably means for controlling the temperature to the specific needs of fish, plants and bacteria.

Fish needs oxygen. The solubility of oxygen depends on the water temperature and salinity. In a system of rising water temperature and increasing salinity the solubility of oxygen is decreasing. Oxygen is, hence, an important parameter for the present system. Its level depends on various factors, e.g. kind of the fish, water temperature, kind of feeding of fish.

Hence, the system according to the invention preferably comprises a device for controlling dissolved oxygen.

Another quality parameter refers to the pH-level, e.g. to the question of acidity. As already stated at the beginning of this description, fish prefers pH-values between 6.5 and pH 9.0. Higher rates of pH lead to conversion of ammonium into toxic ammonia. PH ranges less than 6.5 have negative effect on the metabolism of fish. Plants prefer pH-values less than pH 6.5. Nitrifying bacteria grow best at a level greater than pH 7.5.

Hence, it is essential to bring these different levels of pH for the recirculating aqua culture system and the hydroponic system into a system of equilibrium.

Thus, the system comprises a unit for controlling the various pH-levels of the RAS-part and of the hydroponic part. It is preferred to bring these parts into a pH range of equilibrium which fits to the specific needs of the species of fish and plants which grow in the system.

All the more the water acidity influences many of the quality parameters of the medium, including nitrites and nitrates.

Thus, it is preferable to balance the pH for the medium of the fish, e.g. to the pH requirements of the plants or vice versa; a range between pH 6.8 and 7.0 is preferred in many cases, being an acceptable compromise.

Preferably, there is also a device for controlling alkalinity (CaCO₃) in order to neutralize acid in the medium taking the necessary pH-level into account.

The nutrient to be used for the system according to the invention comprises amongst others nitrogen N as well as phosphorus P as essential components. Nitrogen in the system of the invention comes into existence amongst others due to the excrements of the fish. The medium contains ammonia (NH₃), which may be toxic to the fish already at very low levels, nitrite is toxic to the fish at higher levels. On the other side nitrogen can be used in order to stimulate growth of the plants. The solid waste in form of excrements or feed in the multi-trophic system is converted into ammonium by microbes. As already mentioned the bacteria convert ammonium into nitrites and then into nitrates.

Thus, the system according to the invention preferably comprises a unit for denitrification. The unit deals with the existing of nitrate in oxygenated waters; the nitrate (NH₄⁺) can be biochemically transferred to nitrite (NH₃) which again can be oxidized to nitrate once more. The denitrification unit is, hence, capable of denitrification, i.e. reducing nitrate, as well as of nitrification, i.e. oxidation of ammonia or ammonium to nitrite.

If all or some of the components/modules described are used together with a solar/photovoltaic technology, the cost-effectiveness-ratio is increasing.

### Distillation unit:

Since hydroponics is - as already mentioned - a soil-less cultivation system, the nutrients for the plants are being delivered - among others - by the fish food as fish waste, i.e. as excrements. The nutrients may be divided into macronutrients and micronutrients. Macronutrients as nitrogen N, phosphorus P, potassium K, calcium Ca, magnesium Mg and sulfur S are of at most importance for the plants.

Micronutrients such as iron Fe, copper Cu, boron B, zinc Zn etc. may be preferably added.

Since the nutrient in the system comes through the fish food as fish waste or rests of the food, the macro- and micro-nutrient concentration in the RAS loop is automatically consistently higher than in the hydroponic component in case no additional fertilizer inputs occur in the hydroponic part. On the other hand, as already mentioned, the converse situation should be achieved since the plants in the hydroponic loop need the supply of the macro- and micro-nutrient concentration. Hence, DACS-systems require a significant amount of additional fertilizer or nutrient manipulation in order to meet the optimal growth parameters. This situation, however, cannot be effectively altered by the fact that the remineralization loop supplies the hydroponic component with additional nutrients.

One possible solution to this situation not wanted would be to increase nutrient concentration in the hydroponic loop, while ensuring RAS water conditions meet specific species requirements. However, in the context of the system for growing vegetation, especially in the context of aquaponics system, additional fertilization leads to corresponding extra costs.

On the other hand, fish needs nutrient-poor medium. Just conducting the nutrient-enriched medium of the RAS part to the hydroponic part and filling the RAS part with fresh medium would lead the entire system ad absurdum because no medium, e.g. water, could be saved at all.

In addition, it is to be mentioned that addition of artificial fertilizers may on the base of further costs raise as well as of raise of the ecological footprint the hydroponic nutrient content, however, it would not solve the problem of the high nitrate values in the RAS.

The applicant has surprisingly found that such an obstacle of additional fertilization can be overcome by implementing a distillation process. Thus, it is an essential feature of the invention, to provide a facility for distillation.

Distillation in this context is capable of increasing the nutrient concentration within the hydroponic loop while ensuring preferable nutrient-poor conditions for the fish. In addition, water usage can also be minimized. The distillation unit overcomes water and nutrient discharges. Distillation technology can be used to balance nutrient concentrations.

As already mentioned above with regard to the multi-trophic part of the facility, the hydroponic sump unit receives medium, e.g. water, from the sump unit of the multi-trophic part of the facility.

As already mentioned, the sump unit of the multi-trophic part received the liquid part of the medium containing the dissolved nutrients. This liquid part is further conducted to the hydroponic sump unit. The hydroponic sump unit also receives back the medium, e.g. the water, from the hydroponic container in which the plants took resp. absorbed at least a great part of the nutrients of the medium and cleansed the water at least to some extent; this part of water may still include some of the nutrients in case the plants did not absorb all nutrients.

This entire medium then - and again it has to be kept in mind that is a permanent circulating process - will be conducted from the container of the hydroponic sump unit to the distillation unit, where a separation process takes place will be described in more detail below.

The result of this separation process is that the medium will separated in one liquid part which is nutrient-poor and cleansed and which will be conducted back from the distillation unit/ the multi-trophic container, e.g. to the fish tank via the sump unit of the multi-trophic part, generally also via bio filter unit and/or the gas exchange unit. Thus, the medium is highly suitable for the fish - and the entire circulating loop may start again.

The separation process conducted in the distillation unit leads - besides the nutrient-poor medium - to a concentration of nutrients which will be conducted back from the distillation unit to the hydroponic sump unit. In the hydroponic sump unit a cooling of the medium received from the distillation unit takes place. Hence, this nutrient-enriched medium will be conducted from the hydroponic sump unit to hydroponic container making these nutrients available for the plants.

The hydroponic sump unit itself conducts at least a great part of the medium received to the distillation unit.

More specifically, medium from the hydroponics sump is being concentrated in the distillation unit resulting in two separated flows, namely a demineralized water to the RAS on the one hand and a concentrated nutrient solution (i.e. brine) flowing back to the hydroponic loop on the other hand.

According to the invention the distillation unit may run on various constructional principles or combinations hereof.

Microfiltration (MF), ultrafiltration (UF), nanofiltration (NF), reverse osmosis (RO), pervaporation and electrodialysis are membrane processes that are appropriate.

An example of the distillation unit uses the membrane distillation (MD) technique. A hydrophobic microporous membrane separates the heated medium and a cooled receiving phase. The temperature difference resulting from this across the membrane causes water vapor transfer through the pores from high vapor pressure side to the low one.

The soluble solid content of the medium as far as it is still existing when being received from the hydroponics sump unit is increased by concentration process. This concentrated remaining part of the medium, i.e. the concentrated nutrient solution, is conducted back again to the hydroponics sump unit back again, where it is cooled down further and then conducted to the hydroponic water culture unit (DWC) or similar units according to the explanation given above.

The distilled water part of the medium, i.e. the vaporized water, gets demineralized by this process and is conducted in this nutrient-poor concentration back to the multi-trophic sump unit and from there conducted via the bio filter unit and the optional gas exchange unit back again to the container, e.g. fish tank.

Membrane distillation MD is a thermally driven process, in which water vapor transport occurs through a nonwetted porous hydrophobic membrane. A vapor pressure gradient is generated by a temperature difference across the membrane. The water transport through the membrane can comprise the steps of formation of a vapor gap at the hot medium-membrane interface, transport of the vapor phase through the microporous system and condensation of the vapor at the cold side membrane-permeate solution interface.

Specific configurations of this technique are usable, e.g. the so called direct contact membrane distillation (DCMD) process according to which water having lower temperature than liquid in medium is used as condensing fluid in permeate side; accordingly, the liquid in both sides of the membrane is in direct contact with the hydrophobic microporous membrane.

An alternative is the so called air gap membrane distillation method (AGMD), in which water vapor is condensed on a cold surface that has been separated from the membrane via an air gap.

A further possibility is the so called sweeping gas membrane distillation method (SGMD) using a cold inert gas is used in permeate side for sweeping and carrying the vapor molecules to outside the membrane module where the condensation takes place.

The technique of the so called vacuum membrane distillation method (VMD), uses the application of vacuum at the permeate side; the applied vacuum pressure is lower than the equilibrium vapor pressure with the consequence that condensation takes place outside of the membrane module.

Other distillation techniques may also be used, e.g. osmotic distillation (OD) in which a microporous hydrophobic membrane separates two aqueous solutions at different solute concentrations.

The distillation facility is, therefore, capable of concentrating the hydroponic nutrient solution and of directing demineralized water to the RAS part of the system back again. The nutrient solution which is achieved by running this process in the units described contains the nutrient concentrate. This concentrate usually does not consist of particulate nutrients, i.e. solid nutrients but of dissolved nutrients.

Trials and tests of the applicant as well as calculations show that 30% - 75% of the flow to the distillation unit is remineralized and can be reused within the RAS. One of the further consequences is that the RAS nitrate level can be kept on levels just below 50 ppm.

A further advantage of the facility is that the hydroponic and RAS nutrient concentrations are directly regulated. The treated sludge, i.e. waste, is further concentrated to increase the concentration in the hydroponics and to increase water quality in the RAS.

Additionally to the proportioning of the nutrient concentrations of the RAS system as well as of the hydroponic system, the at least one distillation unit is capable to desalinate sea or brackish water, thus increasing capacity of dry regions to produce food within the sustainable system.

Hence, the implementation of distillation processes contributes to the nitrate balances in multi-loop aquaponics systems to attain optimal growth condition for both fish and vegetation, e.g. plants, by concentrating the hydroponic nutrient solution while diluting the RAS process water.

### Remineralization loop:

As already indicated above in system for growing vegetation according to the invention can additionally comprise at least one further unit in the form of a bio reactor.

The provision of an unit comprising a bio reactor could be characterized as providing a so called remineralization unit resp. remineralization loop which is capable to further reducing the pH value of solid nutrient parts in the system and to convert at least a great part, preferably the entire part, of these solid nutrient parts into bio-fertilizer.

It was already indicated in the context of the description of the mechanical filter unit of the RAS part of the facility according to the invention that at least a great part of the water-soluble particulate parts which are separated due to the process of the mechanical filter may be conducted from the mechanical filter unit to the bio reactor unit.

The amount of these water-soluble particulate parts which are separated in the mechanical filter unit may vary; usually, however, it amounts to appr. 0,5% - 5% weight.

These water-soluble particulate parts could be named as aquaculture waste. They are typically fish sludge, i.e. excrements and uneaten feed.

The water-soluble particulate parts are getting caught in the gitter, net or membrane or other separation means as a result of the mechanical filtering process run by the mechanical filter unit. The particulate parts getting caught may be separated by applying overpressure which results in flushing out the particulate parts. Needless to say that also different methods of separation and conducting of these particulate parts may be applied.

The bio reactor is designed to conduct an aerobic post treatment of the particulate parts, i.e. of the aquaculture waste.

The bio reactor reduces the pH value of this aquaculture waste. As a result of reducing the pH value it will amount to a range of pH 6 to pH 5, preferably, however, to an amount less than pH 5.

The reduction of the pH value does preferably not influence the nutrient content, i.e. the nutritional value. The nutrient content of this aquaculture waste after having passed the process of reducing the pH value remains preferably the same.

However, by reducing the pH value in the bio reactor unit the nutrients of tis aquaculture waste are dissolved in an advantageous manner. This means that running the process in the bio reactor unit results in a "pulling out" of the nutrients of the aquaculture waste, e.g. fish sludge.

A preferred range of less than 5 pH leads to a much better nutrient recovery efficiency. The aquaculture waste is effectively converted into bio-fertilizer.

Due to the pH value and the corresponding suppressed methanogenesis, the effluent is, however, rich in volatile fatty acids (VFAs) which are growth retarding.

Thus, the bio reactor unit preferably provides an additional process step of an aerobic post-treatment, which provides steps of oxidizing resp. reducing the VFAs so that the effluent of this post-treatment step can be transferred to the hydroponic system.

Hereby, the transfer of the aquaculture waste into bio-fertilizer is preferably finalized in a device for radial flow settling which may part of the entire bio reactor unit.

Radial flow settlers are a type of filter that supports removing the solid parts of the aquaculture waste and hereby making bio-fertilizer. In a radial flow settler the aquaculture waste already treated in the bio reactor as described above enters for instance the center of a thank vertically and flows through a stilling well causing low density solids to be easily settled out of the water column as they settle at the tank. Filtered medium overflows a weir at the top of the settler into a collection trough where the treated medium is sent off to the hydroponics part of the facility.

Of course other constructional principles of a radial flow settler also work in an appropriate manner.

According to the above mentioned bio reactor unit the treated effluent is being transferred to the hydroponic part of the facility, preferably to the hydroponic sump already mentioned.

When mixing this effluent which has, as described, a low pH value with the medium coming from the RAS part of the facility, which is also already pH value-reduced, as described above, a further reduction of the pH value in the hydroponic part of the facility is possible which is advantageous for the growth of the plants according to the above mentioned requirements for the pH level for plants. Irrespective of this, at least most part of the nutrients needed for the growth of the plants remain in the effluent transferred from the bio reactor unit to the hydroponic part of the facility.

When the effluent will have reached the hydroponic part of the facility, i.e. the hydroponic sump, the treatment of the medium will continue as described above.

This means that in case of providing the above mentioned distillation unit the medium passes the corresponding process steps described. In case a distillation is not provided, the nutrient-enriched medium is directly conducted from the hydroponic sump to the hydroponic bed containing the plants; the nutrient-poor water part will be conducted back to the multi-trophic container, e.g. fish tank, as described above.

It is to emphasize that providing a bio reactor unit in the facility according to the invention is not restricted to further processing of the water-soluble particular parts of fish sludge being separated from the mechanical filter. The bio reactor unit is also capable of processing resp. treatment of the external primary fertilizing substances, such as excrements from livestock, e.g. cattle, pork, chicken, or such as shredded organic household waste and plant waste products.

This means that the function of the bio reactor unit is universal. The bio reactor can be universally deployed for both aquaculture waste and excrements from livestock, shredded organic household and plant waste products.

The bio reactor may be positioned in the system between the multi-trophic container and the hydroponic system, especially following the micro screen filter, e.g. drum filter.

The bio reactor may functionally comprise a settling basin plus pump.

The bio reactor is able to increase to remineralize fish sludge to convert aqua culture waste, i.e. fish excrements and uneaten feed, into bio-fertilizer. The applicant found out that providing low pH, i.e. less than 5.0, led to a much better nutrient recovery efficiency.

The providing of a bio reactor is not restricted to a certain type of bio reactor. However, so called upflow anaerobic sludge blanked reactor (hereinafter: UASB) may be appropriate reactors.

An UASB-reactor can comprise a single tank in which anaerobic centralized or decentralized waste water or black water can be treated achieving high removal of organic pollutants. The waste water enters the reactor, for instance, from the bottom and flows upward. A suspended sludge blanket filters and treats the waste water as the waste water flows through it. Bacteria in the sludge convert the organic matter by anaerobic treatment and leading to biogas. Solids may be separated by filters. Nutrients are removed only to some little extent. Therefore the waste water as well as the stabilized sludge can be used for the hydroponic system as fertilizer.

Instead or in addition to UASBs reactors also so called expanded granular sludge bed digestion-reactors (hereinafter: EGSB) or internal circulation-reactors (hereinafter: IC) may be used.

In general any type of bio reactor may be used.

Since nitrogen and phosphorus are not effectively reduced in anaerobic technologies, the providing of a bio reactor is appropriate in systems for growing vegetation according to the invention, especially in aquaponics systems.

### Example of carrying out the invention:

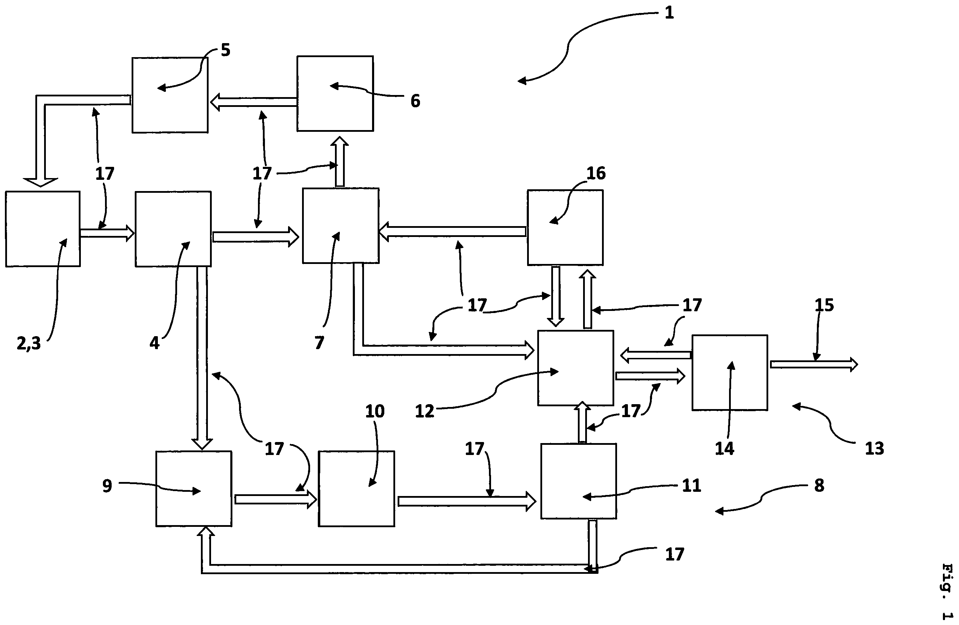

The system and method according to the invention is described in more detail; however the invention is not restricted to this detail, which shows in Fig. 1: a water flow scheme of the multi-loop aquaponics system.

The facility 1 according to the invention shows a scheme of the multi-loop aquaponics system comprising four part-systems which are decoupled.

The facility according to the invention comprises accordingly multi-trophic units 2, 4, 6, 7 as well as hydroponic units 13, 12, 14.

The facility also comprises a distillation unit 16 and/or a bio reactor unit 8, 9, 10, 11. The use of recirculating aquaculture systems is an embodiment of the multi-trophic part of the facility.

A multi-trophic part of the facility comprises a container 2.

This multi-trophic system as shown in Fig. 1 comprises besides the container 2 additional units, such as a bio-filter unit 6, a gas exchange unit 5, a mechanical filter unit 4. These additional units are arranged outside of the container 2.

The multi-trophic container 2 is designed to contain the fish. The container has one or more connectors to a medium discharge line, e.g. a water discharge line, which conducts the medium into at least one sedimentation tank or chamber (not shown). This sedimentation device may be used as pre-filtration system as well as pump sumps.

The total medium flow is split into two independent loops. The first loop can be used for conducting the medium, e.g. water, to the plant facility, i.e. to the hydroponic part, according to the invention. The second independent loop returns water back from the hydroponic part of the facility to the multi-trophic container 2 containing the fish, i.e. fish tank 3.

The facility comprises a unit for mechanical filtration 4 of the medium of the recirculating aquaculture system. In order to maintain good medium quality and to prevent the system from decaying, it is necessary to remove rests of feed given to the fish and the effluents of the fish, e.g. excrements. This is processed by the mechanical filtration unit 4.

The mechanical filtration unit 4 is arranged directly following the multi-trophic container 2, i.e. the fish tank 3, and ahead of a bio filter unit 6, according to this example of carrying out the invention.

The mechanical filtration unit 4 separates the solid parts of the medium, e.g. feed rests, excrements, from the rest of the medium, i.e. from the liquid part of the medium.

From the mechanical filtration unit 4 the liquid part of the medium is being conducted to the sump unit 7 whereas the solid parts of the medium are conducted to a bio reactor unit 8, if provided, each for further processing. In case a bio reactor is not provided the solid parts are also conducted to the sump unit.

The sequence order of the sump unit 7 or the bio filtration unit 5 may be as desired.

The sump unit 7 receives at least most of the liquid part of the medium for further processing. The sump unit 7 is designed for a further refinement process, e.g. for further separation of the nutrient components. At least most of the nutrient-enriched part of the liquid is further conducted to the hydroponics sump unit 12. This nutrient-enriched part is intended for further processing within the hydroponic part 13, 12, 14 of the entire facility 1.

The nutrient-poor liquid part of the medium which will be returned to the container 2 at the end of the processing steps and will be conducted from the sump unit 7 either entirely or partially to the bio filtration unit 6.

In case the bio filtration unit 6 follows directly the mechanical filtration unit 4 the liquid part of the medium mentioned will be conducted to the sump unit 7 of the multi-trophic part of the facility 1 and further processed in this sump unit 7 as described and then either fully or partially conducted to an optional gas exchange unit 5 or entirely conducted to the fish tank 3 back again.

The unit for bio filtration 6 aims at a removal of - among others - ammonia, dissolved organics and carbon dioxide. The ammonia being a toxic metabolite found in the excrements of the fish, is being converted into nitrite and/or nitrate.

After having removed all or a great part of the solids by the above mentioned mechanical filtration unit 4, the medium, e.g. water, is conducted through the bio filter unit 6 where the ammonia will be converted first to nitrite and then to nitrate.

The system according to the invention preferably comprises, hence, a unit for denitrification. The unit deals with the existing of nitrate in oxygenated waters; the nitrate (NH₄⁺) can be biochemically transferred to nitrite (NH₃) which again can be oxidized to nitrate once more. The denitrification unit is, hence, capable of denitrification, i.e. reducing nitrate, as well as of nitrification, i.e. oxidation of ammonia or ammonium to nitrite.

The nitrate received by this process is in addition an important nitrogen source for the plants. Since nitrite is also toxic to the fish it has to be ensured that the bacterial system in the bio filter facility works properly with the result that the ammonia is kept within non-toxic levels; the existence of ammonia cannot be deleted completely since the fish segregate permanently ammonia due to the excrements. This means, the bio filtering is an ongoing process.

According to Fig. 1 the RAS part of the invention comprises a (optional) gas exchange unit 5. The gas exchange unit 5 dissolves CO₂ from the medium, e.g. water, and optimizes the level of oxygen. Oxygen is an important quality parameter for the growth of fish. The configuration of the gas exchange unit 5 depends on kind of fish, size of fish, feeding parameters, water temperature and so on.

After passing this optional gas exchange unit 5 the previously mentioned bio filtration unit 6 or sump unit 7 the nutrient-poor water is conducted back to the container 2 of the RAS loop.

The other main part of the system is the at least one hydroponic system 13 comprising at least one hydroponic sump unit 12 and at least one deep water culture unit 14 allowing plants to grow and suspend with the roots immersed in the nutrient solution.

The at least one hydroponic part 13, 12, 14 of the entire facility 1 of the invention comprises a container 14, which contains the substrates for the growth of the vegetation, e.g. the plants, and - of course - the plants themselves.

There exist various constructional approaches of these hydroponic parts of the facility possible.

One of these techniques refers to the deep water culture (hereinafter: DWC) also known as direct water culture, that works by suspending the plants' roots directly into a highly oxygenated nutrient solution.

Since hydroponics is - as already mentioned - a soil-less cultivation system, the nutrients for the plants are being delivered - among others - by the fish food as fish waste, i.e. as excrements. The nutrients may be divided into macronutrients and micronutrients. Macronutrients as nitrogen N, phosphorus P, potassium K, calcium Ca, magnesium Mg and sulfur S are of at most importance for the plants.

Micronutrients such as iron Fe, copper Cu, boron B, zinc Zn etc. may be preferably added.

Since the nutrient in the system comes through the fish food as fish waste or rests of the food, the macro- and micro-nutrient concentration in the RAS loop is automatically consistently higher than in the hydroponic component in case no additional fertilizer inputs occur in the hydroponic part. On the other hand, as already mentioned, the converse situation should be achieved since the plants in the hydroponic loop need the supply of the macro- and micro-nutrient concentration.

On the other hand, fish needs nutrient-poor medium. Just conducting the nutrient-enriched medium of the RAS part to the hydroponic part and filling the RAS part with fresh medium would lead the entire system ad absurdum because no medium, e.g. water, could be saved at all.

In addition, it is to be mentioned that addition of artificial fertilizers may on the base of further costs raise as well as of raise of the ecological footprint the hydroponic nutrient content, however, it would not solve the problem of the high nitrate values in the RAS.

The applicant has surprisingly found that such an obstacle of additional fertilization can be overcome by implementing a distillation process. Thus, it is an essential feature of one embodiment of the invention, to provide a unit for distillation 16.

Accordingly part of the system is the providing of a unit (facility) for distillation 16. Water from the hydroponics sump 12 is being concentrated in the distillation plant 16 resulting in two separated flows, namely transporting back demineralized water to the RAS having nutrient-poor conditions for the fish and concentrated nutrient solution, i.e. increased nutrient concentration, flowing back to the hydroponic loop 13.

Distillation in this context is capable of increasing the nutrient concentration within the hydroponic loop 13, 12, 14 while ensuring preferable nutrient-poor conditions for the fish. In addition, water usage can also be minimized. The distillation unit overcomes water and nutrient discharges. Distillation technology can be used to balance nutrient concentrations.

As already mentioned above with regard to the multi-trophic part 2, 4, 6, 7 of the facility 1 the hydroponic sump unit 12 receives medium, e.g. water, from the sump unit 7 of the multi-trophic part of the facility. The hydroponic sump unit 12 itself conducts at least a great part of the medium received to the distillation unit 16.

Water from the hydroponics sump is being concentrated in the distillation unit resulting in two separated flows, namely a demineralized water to the RAS on the one hand and a concentrated nutrient solution (i.e. brine) flowing back to the hydroponic loop on the other hand.

The distillation unit 16 is, therefore, capable of concentrating the hydroponic nutrient solution and of directing demineralized water to the RAS part of the system back again. The nutrient solution which is achieved by running this process in the units described contains the nutrient concentrate. This concentrate usually does not consist of particulate nutrients, i.e. solid nutrients but of dissolved nutrients.

A further advantage of the facility is that the hydroponic and RAS nutrient concentrations are directly regulated. The treated sludge, i.e. waste, is further concentrated to increase the concentration in the hydroponics and to increase water quality in the RAS.

Additionally to the proportioning of the nutrient concentrations of the RAS part as well as of the hydroponic part, the at least one distillation unit is capable to desalinate sea or brackish water, thus increasing capacity of dry regions to produce food within the sustainable system.

Hence, the implementation of distillation processes contributes to the nitrate balances in multi-loop aquaponics systems to attain optimal growth condition for both fish and vegetation, e.g. plants, by concentrating the hydroponic nutrient solution while diluting the RAS process water.

In the facility according to Fig. 1 the system for growing vegetation comprises at least one further unit in the form of a bio reactor 8, 10.

The provision of an unit comprising a bio reactor 10 could be characterized as providing a so called remineralization unit resp. remineralization loop 8 which is capable to further reducing the pH value of solid nutrient parts in the system and to convert at least a great part, preferably the entire part, of these solid nutrient parts into bio-fertilizer.

It was already indicated in the context of the description of the mechanical filter 4 of the RAS part of the facility 1 according to the invention that at least a great part of the water-soluble particulate parts which are separated due to the process of the mechanical filter unit 4 are conducted from the mechanical filter 4 to the bio reactor loop 8, if provided, including the bio reactor unit 10. An additional settling basin 9 receiving these particulate parts is an option.

These water-soluble particulate parts could be named as aquaculture waste. They are typically fish sludge, i.e. excrements and uneaten feed.

The water-soluble particulate parts are getting caught in the gitter, net ore membrane or other separation means as a result of the mechanical filtering process run by the mechanical filter unit 4. The particulate parts getting caught may be separated by applying overpressure which results in flushing out the particulate parts.

The remineralization loop 8 including the bio reactor unit 10 is designed to conduct an aerobic post treatment of the particulate parts, i.e. of the aquaculture waste.

The bio reactor unit 10 reduces the pH value of this aquaculture waste. As a result of reducing the pH value it will amount to a range of pH 6 to pH 5, preferably, however, to an amount less than pH 5.

The reduction of the pH value does preferably not influence the nutrient content, i.e. the nutritional value. The nutrient content of this aquaculture waste after having passed the process of reducing the pH value remains preferably the same.

However, by reducing the pH value in the bio reactor unit 10 the nutrients of tis aquaculture waste are dissolved in an advantageous manner. This means that running the process in the bio reactor unit 10 results in a "pulling out" of the nutrients of the aquaculture waste, e.g. fish sludge.

A range of less than 5 pH leads to a much better nutrient recovery efficiency. The aquaculture waste is effectively converted into bio-fertilizer.

Due to the pH value and the corresponding suppressed methanogenesis, the effluent is rich in volatile fatty acids (VFAs) which are growth retarding.

Thus, the bio reactor unit 10 provides an additional process step of an aerobic post-treatment, which provides steps of oxidizing resp. reducing the VFAs so that the effluent of this post-treatment step can be transferred to the hydroponic system 13, 12, 14.

The transfer of the aquaculture waste into bio-fertilizer is preferably finalized in a device for radial flow settling 11 which may part of the entire bio reactor unit 8, 10.

Radial flow settlers 11 are a type of filter that supports removing the solid parts of the aquaculture waste and hereby making bio-fertilizer. In a radial flow settler the aquaculture waste already treated in the bio reactor unit 10 as described above enters for instance the center of a thank vertically and flows through a stilling well causing low density solids to be easily settled out of the water column as they settle at the tank. Filtered medium overflows a weir at the top of the settler into a collection trough where the treated medium is sent off to the hydroponics part of the facility (specifics not shown in Fig 1).

According to the above mentioned bio reactor unit 10 the treated effluent is being transferred to the hydroponic part 13, 12, 14 of the facility 1, resp. to the hydroponic sump 12 already mentioned.

When mixing this effluent which has, as described, a low pH value with the medium coming from the RAS part of the facility 1, which is also already pH value-reduced, as described above, a further reduction of the pH value in the hydroponic part 13, 12, 14 of the facility 1 is possible which is advantageous for the growth of the plants according to the above mentioned requirements for the pH level for plants. Irrespective of this at least most part of the nutrients needed for the growth of the plants remain in the effluent transferred from the bio reactor unit to the hydroponic part of the facility.

When the effluent will have reached the hydroponic part 13, 12, 14 of the facility, i.e. the hydroponic sump 12, the treatment of the medium will continue as described above. This means that due to providing the above mentioned distillation unit 16 the medium passes the corresponding process steps described.

The bio reactor 10 is positioned in the system between the multi-trophic container 2 and the hydroponic part 13, 12, 14, especially following the mechanical screen filter 4.

The bio reactor 10 functionally comprises a settling basin 9 plus pump.

The bio reactor 10 is able to increase to remineralize fish sludge to convert aqua culture waste, i.e. fish excrements and uneaten feed, into bio-fertilizer. The applicant found out that providing low pH, i.e. less than 5.0, led to a much better nutrient recovery efficiency. Accordingly, a remineralization loop can improve sustainability performance. This remineralization loop 8 is provided by a settling basin 9, a bio reactor 10 and radial flow settler 11. The remineralization loop is composed by an upflow anaerobic sludge blanket reactor whereby the phosphorus parameter is used in order to determine the flow of the bio reactor 10. Within this system of the remineralization loop 8 fish sludge is remineralized to convert aquaculture waste, i.e. fish excrements and uneaten feed, into bio-fertilizer. The conducting of the remineralization takes place at a low pH value, i.e. less than 5.0 which leads to a much better nutrient recovery efficiency.

The recycling aquaculture system, hydroponics and sludge remineralization are displayed independently to constitute the need for different conditions in each subsystem. In the system provided by the invention there is no need to exchange water in addition to the water replacement as consequence of evapotranspiration 15.

The remineralized sludge, i.e. concentrated liquid fertilizer is only led to the hydroponic system where it is needed. Unnecessary dilution is thus avoided. Of course, global radiation plays an important factor for the evapotranspiration 15 and dependent on the evapotranspiration 15 for the replacement of the water.

Accordingly, RAS-derived fish sludge is being remineralized and supplemented to the hydroponics.

The various components, units are connected to each other by unidirectional or bidirectional devices for water and/or substance circulation 17, i.e. corresponding pipelines.

### List of reference numbers

- 1: facility
- 2: multi-trophic container
- 3: fish tank
- 4: mechanical filter unit
- 5: gas exchange unit
- 6: bio filter unit
- 7: sump unit
- 8: remineralization loop
- 9: settling basin unit
- 10: bio reactor unit
- 11: radial flow settler unit
- 12: hydroponic sump unit
- 13: hydroponic part
- 14: hydroponic bed
- 15: evapotranspiration
- 16: distillation unit
- 17: device for water and/or substance circulation

## Claims

1. A facility for growing vegetation, the facility comprising
- at least one container for taking aquatic animals and/or aquatic organisms (2),
- at least one hydroponic part (13),
- at least one device for medium circulation (17), said medium comprising water and/or substance, the facility further comprising at least one unit (16) for distillation,
**characterized in that**
the unit (16) for distillation is positioned within the facility, such that it receives medium from the hydroponic part and distills the medium, thereby on the one hand obtaining demineralized water, and on the other hand concentrating a hydroponic nutrient solution in order to direct the demineralized water to the at least one container for the aquatic animals and / or organisms, and to make available the concentrated nutrients for the plants in the hydroponic part

2. A facility according to claim 1 **characterized in that** the container (2) is a fish tank (3).

3. A facility according to one or more of the preceding claim 1 or 2, **characterized in that**
the facility comprises at least one mechanical filter unit (4).

4. A facility according to claims 1 - 3, **characterized in that** the facility comprises at least one unit for bio filtration (6).

5. A facility according to claims 1 - 4, **characterized in that** the at least one hydroponic part (13) comprises a deep water culture (DWC)-system.

6. A facility according to claims 1 - 5, **characterized in that** the at least one hydroponic part (13) comprises a nutrient film technique (NFT)-system and/or grow bed system.

7. A facility according to claims 1 - 6, **characterized in that** the plant/facility comprises means for
- controlling temperature, and/or
- environmental parameters, and/or
- oxygen, and/or
- pH-value, and/or
- nitrogen compounds, and/or
- alkalinity, and/or
- nutrients, especially macro- und micronutrients.

8. A facility according to claims 1 - 7, **characterized in that** the facility comprises a photovoltaic and/or biogas system.

9. Method for operating a facility according to claims 1 - 8,
**characterized in that**
the at least one unit for distillation (16) receives medium from the hydroponic part
and distills the medium, thereby on the one hand obtaining demineralized water, and on the other hand concentrating a hydroponic nutrient solution in order to direct the demineralized water to the at least one container for the aquatic animals and/or oganisms, and to make available the concentrated nutrients for the plants in the hydroponic part.

## Patentansprüche

1. Anlage zum Anbau von Vegetation, wobei die Anlage umfasst:
- wenigstens einen Behälter zum Aufnehmen von Wassertieren und/oder Wasserorganismen (2),
- wenigstens einen hydroponischen Teil (13),
- wenigstens eine Vorrichtung zur Mediumzirkulation (17), wobei das Medium Wasser und/oder Substanz umfasst,
wobei die Anlage ferner wenigstens eine Einheit (16) zur Destillation umfasst,
**dadurch gekennzeichnet, dass**
die Einheit (16) zur Destillation derart innerhalb der Anlage angeordnet ist, dass sie ein Medium von dem hydroponischen Teil aufnimmt und das Medium destilliert,
wodurch einerseits vollentsalztes Wasser erhalten wird und andererseits eine hydroponische Nährlösung konzentriert wird, um das vollentsalzte Wasser zu dem wenigstens einen Behälter für die Wassertiere und/oder -organismen zu leiten und die konzentrierten Nährstoffe für die Pflanzen in dem hydroponischen Teil verfügbar zu machen.

2. Anlage nach Anspruch 1, **dadurch gekennzeichnet, dass**
der Behälter (2) ein Fischbecken (3) ist.

3. Anlage nach einem oder mehreren der vorhergehenden Ansprüche 1 oder 2, **dadurch gekennzeichnet, dass**
die Anlage wenigstens eine mechanische Filtereinheit (4) umfasst.

4. Anlage nach den Ansprüchen 1 - 3, **dadurch gekennzeichnet, dass**
die Anlage wenigstens eine Einheit zur Biofiltration (6) umfasst.

5. Anlage nach den Ansprüchen 1 - 4, **dadurch gekennzeichnet, dass**
der wenigstens eine hydroponische Teil (13) ein Tiefwasserkultur(deep water culture - DWC)-System umfasst.

6. Anlage nach den Ansprüchen 1 - 5, **dadurch gekennzeichnet, dass**
der wenigstens eine hydroponische Teil (13) ein Nährstofffilmtechnik(nutrient film technique - NFT)-System und/oder Anzuchtbeetsystem umfasst.

7. Anlage nach den Ansprüchen 1 - 6, **dadurch gekennzeichnet, dass**
das System/die Anlage Einrichtungen umfasst
- zum Steuern der Temperatur und/oder
- für Umweltparameter und/oder
- für Sauerstoff und/oder
- für pH-Wert und/oder
- für Stickstoffverbindungen und/oder
- für Alkalinität und/oder
- für Nährstoffe, insbesondere Makro- und Mikronährstoffe.

8. Anlage nach den Ansprüchen 1 - 7, **dadurch gekennzeichnet, dass**
die Anlage ein Photovoltaik- und/oder Biogassystem umfasst.

9. Verfahren zum Betreiben einer Anlage nach den Ansprüchen 1 - 8,
**dadurch gekennzeichnet, dass**
die wenigstens eine Einheit zur Destillation (16) ein Medium von dem hydroponischen Teil aufnimmt und das Medium destilliert,
wodurch einerseits vollentsalztes Wasser erhalten wird und andererseits eine hydroponische Nährlösung konzentriert wird, um das vollentsalzte Wasser zu dem wenigstens einen Behälter für die Wassertiere und/oder -organismen zu leiten und die konzentrierten Nährstoffe für die Pflanzen in dem hydroponischen Teil verfügbar zu machen.

## Revendications

1. Installation pour faire pousser de la végétation, ladite installation comprenant
- au moins un récipient destiné à recevoir des animaux aquatiques et/ou des organismes aquatiques (2),
- au moins une partie hydroponique (13),
- au moins un dispositif pour la circulation d'un milieu (17), ledit milieu comprenant de l'eau et/ou une substance,
l'installation comprenant en outre au moins une unité (16) de distillation,
**caractérisée en ce que**
l'unité (16) de distillation est positionnée à l'intérieur de l'installation, de telle sorte qu'elle reçoive un milieu provenant de la partie hydroponique et distille le milieu,
d'une part en obtenant ainsi de l'eau déminéralisée, et d'autre part en concentrant une solution nutritive hydroponique afin de diriger l'eau déminéralisée vers l'au moins un récipient pour les animaux et/ou organismes aquatiques, et de mettre à disposition les nutriments concentrés pour les plantes dans la partie hydroponique.

2. Installation selon la revendication 1, **caractérisée en ce que**
le récipient (2) est un réservoir à poissons (3).

3. Installation selon l'une ou plusieurs des revendications précédentes 1 ou 2, **caractérisée en ce que**
l'installation comprend au moins une unité de filtrage mécanique (4).

4. Installation selon les revendications 1 - 3, **caractérisée en ce que**
l'installation comprend au moins une unité pour une filtration biologique (6).

5. Installation selon les revendications 1 - 4, **caractérisée en ce que**
l'au moins une partie hydroponique (13) comprend un système de culture en eau profonde (deep water culture - DWC).

6. Installation selon les revendications 1 - 5, **caractérisée en ce que**
l'au moins une partie hydroponique (13) comprend un système de technique du film nutritif (nutrient film technique - NFT) et/ou un système de lit de culture.

7. Installation selon les revendications 1 - 6, **caractérisée en ce que**
le système/l'installation comprend des moyens pour
- le contrôle de la température et/ou
- les paramètres environnementaux et/ou
- l'oxygène et/ou
- la valeur pH et/ou
- les composés d'azote et/ou
- l'alcalinité et/ou
- les nutriments, en particulier les macronutriments et micronutriments.

8. Installation selon les revendications 1 - 7, **caractérisée en ce que**
l'installation comprend un système photovoltaïque et/ou de biogaz.

9. Procédé d'exploitation d'une installation selon les revendications 1 - 8,
**caractérisé en ce que**
l'au moins une unité de distillation (16) reçoit un milieu de la partie hydroponique et distille le milieu
d'une part en obtenant ainsi de l'eau déminéralisée, et d'autre part en concentrant une solution nutritive hydroponique afin de diriger l'eau déminéralisée vers l'au moins un récipient pour les animaux et/ou organismes aquatiques, et de mettre à disposition les nutriments concentrés pour les plantes dans la partie hydroponique.
